# EUROPÄISCHE PATENTSCHRIFT

(11) **EP 0 834 441 B1**
(45) Veröffentlichungstag und Bekanntmachung des Hinweises auf die Patenterteilung: **30.05.2001**
(21) Anmeldenummer: 97115515.5
(22) Anmeldetag: 08.09.1997
(51) Int. Cl.: B62D 25/10

(54) **Fahrzeugkarosserie mit einem einen Deckel aufweisenden Anbau**
Vehicle body having a hood
Carrosserie d'un véhicule ayant un capot

(30) Priorität: 02.10.1996 DE 19640755
(43) Veröffentlichungstag der Anmeldung: 08.04.1998
(73) Patentinhaber: Volkswagen Aktiengesellschaft, 38436 Wolfsburg (DE)
(72) Erfinder: Rugullis, Michael, 38108 Braunschweig (DE); Sinnhuber, Ruprecht, Dipl.-Ing., 38518 Gifhorn (DE)

(56) Entgegenhaltungen:
- DE-A- 4 000 904
- US-A- 3 709 316
- US-A- 5 197 560

## Beschreibung

Die Erfindung betrifft eine Fahrzeugkarosserie entsprechend dem Oberbegriff des Patentanspruchs 1, wie sie aus der DE 40 00 904 A1 (internationale Klasse B 62 D 25/08) bekannt ist. Darin ist ein Anbau beschrieben, der zu beiden Seiten des Deckels mehrere hintereinanderliegende Verriegelungselemente aufweist, denen an der Unterseite des Aufbaus entsprechende Befestigungsstellen zwischen einem Bodenblech und den Seitenteilen zugeordnet sind. Durch diese Anordnung wird der Anbau in die Lage versetzt, sich im Falle eines Frontalaufpralls ganz gezielt energieverzehrend zu verformen, indem die Zonen zwischen zwei hintereinanderliegenden Verriegelungselementen ausbeulen. Eine Karosserie mit einem derart gestalteten Anbau ist unter rein sicherheitstechnischen Aspekten sehr wirksam, doch wegen des nicht unerheblichen Aufwandes insbesondere für eine Großserienfertigung wenig geeignet.

Der Erfindung liegt daher die Aufgabe zugrunde, bei einer gattungsgemäßen Fahrzeugkarosserie mit vertretbarem Aufwand die passive Sicherheit in Anlehnung an den o. g. Stand der Technik zu verbessern.

Diese Aufgabe wird durch die kennzeichnenden Merkmale des Patentanspruchs 1 gelöst. Vorteilhafte Ausgestaltungen der Erfindung sind Gegenstand der Unteransprüche.

Die Erfindung macht sich die Existenz der Deckelscharniere und einer in der Regel ebenfalls vorhandenen Verriegelungseinrichtung an der den Scharnieren gegenüberliegenden Deckelkante zunutze. Versuche haben nämlich gezeigt, daß unter Einbeziehung dieser Bauteile die sicherheitstechnischen Belange auch dann hinreichend gewahrt werden, wenn der Deckel zwischen Verriegelungseinrichtung und Scharnieren nur jeweils einmal pro Längsrand mit einem Verriegelungselement versehen ist, das erst im Crashfall wirksam wird, im übrigen aber das Öffnen des Deckels nach Aufhebung der Verriegelungseinrichtung nicht behindert. Wichtig für die Wirksamkeit des Deckels als Deformationsglied ist z. B. der Umstand, daß der Deckel keine in Längsrichtung verlaufenden Verstärkungen aufweist.

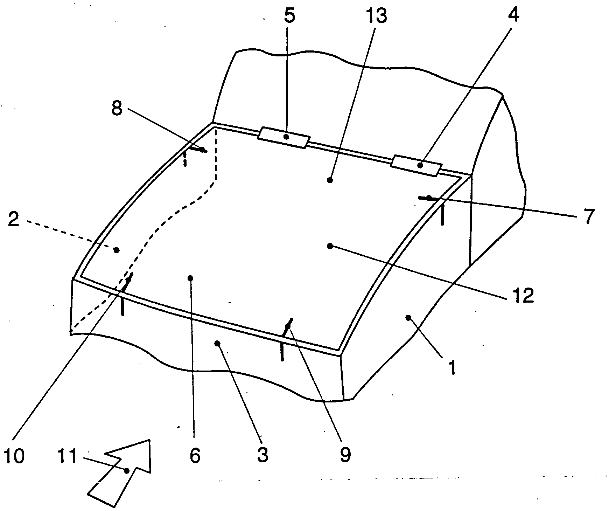

Ein Ausführungsbeispiel der Erfindung wird nachstehend anhand der Zeichnung erläutert. Diese zeigt in schematischer Darstellung einen frontseitigen, den Motorraum umgebenden Karosserieanbau, dessen Deckel im Bereich seiner Längsränder über je ein Verriegelungselement (ebenfalls nur schematisch dargestellt) lösbar mit den Seitenteilen verbunden ist.

Der Anbau umfaßt zwei karosseriefeste Seitenteile 1 und 2, einen Schloßquerträger 3 und einen über Scharniere 4, 5 beweglich mit der Karosserie verbundenen Deckel 6, der im Bereich seiner Längskanten über Verriegelungselemente 7, 8 formschlüssig mit den Seitenteilen 1, 2 und im Bereich seiner Vorderkante über eine Verriegelungseinrichtung, die im Ausführungsbeispiel aus zwei Schlössern 9, 10 besteht, formschlüssig mit dem Schloßquerträger 3 verbindbar ist. Die Verriegelungselemente 7, 8 werden erst im Crashfall wirksam. Möglichkeiten, wie dies konstruktiv umgesetzt werden kann, finden sich in der DE 40 00 904 A1.

Bei einer außergewöhnlich großen Krafteinwirkung auf das Fahrzeug in Richtung des Pfeils 11, wie sie bei einem Frontalaufprall zustande kommt, kommen die Verriegelungselemente 7, 8 in Eingriff, so daß an dieser Stelle der Deckel 6 nicht nach oben ausknicken kann. Die Bereiche 12, 13 vor und hinter den Verriegelungselementen 7, 8 werden im weiteren Verlauf des Aufpralls mehr oder weniger stark harmonikaartig verformt und verzehren dabei gewollt einen Teil der Aufprallenergie.

## Patentansprüche

1. Fahrzeugkarosserie mit einem front- und/oder heckseitigem Anbau mit zwei sich in Fahrtrichtung erstreckenden Seitenteilen (1,2) und einem an einem Querrand in Scharnieren (4,5) angelenkten Deckel (6), der im Bereich seiner seitlichen Längsränder über während eines Frontalaufpralls wirksamwerdende Verriegelungselemente (7,8) fest mit den Seitenteilen (1,2) verbindbar ist, dadurch gekennzeichnet, daß der Deckel (6) im Bereich eines den Scharnieren (4,5) abgekehrten Querrandes, wie an sich bekannt, eine dauernd wirksame Verriegelungseinrichtung (9,10) aufweist, und daß die zwischen den Verriegelungselementen (7,8) einerseits und den Querrändern des Deckels (6) andererseits gelegenen Deckelzonen (12,13) längsverstärkungsfrei als eine harmonikaartige Verformung des Deckels (6) während eines Frontalaufpralls zulassende Deformationsglieder ausgebildet sind.

2. Fahrzeugkarosserie nach Anspruch 1, dadurch gekennzeichnet, daß zu beiden Seiten des Deckels (6) je ein Verriegelungselement (7, 8) angeordnet ist.

3. Fahrzeugkarosserie nach Anspruch 2, dadurch gekennzeichnet, daß die beiden Verriegelungselemente (7, 8) bezüglich der Fahrzeuglängsachse sich gegenüberliegend angeordnet sind.

4. Fahrzeugkarosserie nach Anspruch 3, dadurch gekennzeichnet, daß die Verriegelungselemente (7, 8) im hinteren Drittel des Deckels (6) angeordnet sind.

## Claims

1. Vehicle body having a structure at the front and/or rear with two side parts (1, 2) extending in the direction of travel and a lid (6) articulated at a transverse edge in hinges (4, 5) and able to be firmly connected to the side parts (1, 2) in the region of its side longitudinal edges by means of locking elements (7, 8) which become effective during a head-on collision, characterised in that, in the region of a transverse edge remote from the hinges (4, 5), the lid (6), in a manner known per se, comprises a permanently effective locking device (9, 10), and that the lid zones (12, 13) lying between the locking elements (7, 8) on the one hand and the transverse edges of the lid (6) on the other hand are formed without longitudinal reinforcement as deformation elements permitting a concertina-like deformation of the lid (6) during a head-on collision.

2. Vehicle body according to claim 1, characterised in that on the two sides of the lid (6) a respective locking element (7, 8) is disposed.

3. Vehicle body according to claim 2, characterised in that the two locking elements (7, 8) are disposed opposite each other with respect to the vehicle longitudinal axis.

4. Vehicle body according to claim 3, characterised in that the locking elements (7, 8) are disposed on the rear third of the lid (6).

## Revendications

1. Carrosserie de véhicule automobile, comportant une structure d'extension, vers l'avant et/ou vers l'arrière, présentant deux parties latérales (1, 2), s'étendant dans le sens de la marche du véhicule, et un capot (6), monté de manière articulée dans des charnières (4, 5) au niveau d'un bord transversal, lequel capot peut être relié rigidement, dans la zone de ses bords longitudinaux latéraux, rigidement aux parties latérales (1, 2) par l'intermédiaire d'éléments de verrouillage (7, 8), qui entrent en fonction lors d'une collision frontale, caractérisée en ce que le capot (6) présente, dans la zone d'un bord transversal, situé à l'opposé des charnières (4, 5), d'une manière connue en soi, un dispositif de verrouillage (9, 10) à efficacité permanente, et en ce que les zones de capot (12, 13) situées entre les éléments de verrouillage (7, 8), d'une part, et les bords transversaux du capot (6), d'autre part, sont conçues exemptes de renforcements longitudinaux et en tant qu'éléments de déformation, autorisant une déformation en accordéon du capot (6) pendant une collision frontale.

2. Carrosserie de véhicule automobile selon la revendication 1, caractérisée en ce qu'un élément de verrouillage (7, 8) est associé respectivement à chacun des deux côtés du capot (6).

3. Carrosserie de véhicule automobile selon la revendication 2, caractérisée en ce que les deux éléments de verrouillage (7, 8) sont disposés face à face par rapport à l'axe longitudinal du véhicule.

4. Carrosserie de véhicule automobile selon la revendication 3, caractérisée en ce que les éléments de verrouillage (7, 8) sont disposés dans le tiers arrière du capot (6).
